# EUROPEAN PATENT APPLICATION

(11) **EP 3 081 834 A1**
(43) Date of publication of application: **19.10.2016**
(21) Application number: 16165452.0
(22) Date of filing: 14.04.2016
(51) Int. Cl.: F16J 15/16

(54) **HIGH PRESSURE PUMP SEAL SUPPORT**

(30) Priority: 15.04.2015 US 201562147956 P
(71) Applicant: Teledyne Isco, Thousand Oaks, CA 91360 (US)
(72) Inventor: WALTERS, Henry, Lincoln, NE 68506 (US)
(74) Representative: Keane, David Colman

(57) **Abstract**

A lip seal assembly is disclosed. The lip seal assembly includesa seal, an upper backing ring disposed below the seal, and a lower backing ring disposed below the upper backing ring. The upper and lower backing rings are configured to distort in a predetermined manner.

## Description

### CROSS-REFERENCE TO RELATED APPLICATIONS

This application claims the benefit under 35 U.S.C. §119(e) of U.S. Provisional Patent Application Serial No. 62/147,956, entitled HIGH PRESSURE PUMP SEAL SUPPORT, filed April 15, 2015, the entire disclosure of which is hereby incorporated by reference herein.

### FIELD OF TECHNOLOGY

The present disclosure is related to a high pressure seal support for pumps. More particularly, the present disclosure is related to a seal support that deforms in a predetermined manner to maintain contact between a piston assembly and an inner wall of a cylinder.

### BACKGROUND

Lip seals are made from a polymer material that readily extrudes through very small gaps when exposed to high pressures. Metal components operating under high pressure conditions require clearance gaps, tolerances, in order to function without metal-to-metal wear damage. The minimum necessary gaps between metal parts are large enough for the seal polymer to easily extrude through under operating pressures.

Seal extrusion causes the seal to deform sufficiently so that the seal cannot create a containment barrier. This is particularly true when the operating pressures involved are well beyond the yield strength of the seal material. The required gaps between the metal parts must be eliminated to prevent the seal failure.

A lip seal known under the trade name TRELLEBORG employs a single plastic backing ring with an angled surface to push the heel of the seal radially inward. The TRELLEBORG design employs a backing ring that is thicker on the outer edges, and with an angled surface facing toward the seal. A lip seal known under the trade name BAL SEAL employs a single metal backing ring in a similar manner as the TRELLEBORG design.

Conventional lip seals made of polymeric materials become essentially fluid at high operating pressures of 10,000 to 50,000 psi. At such high operating pressure, the polymer wants to flow through any clearance gap that exists between a cylinder and a piston assembly slidably received within the cylinder. Also, this problem is compounded because, at such high operating pressures, the cylinder itself deforms and grows in size, like a balloon, and the piston assembly shrinks, thus increasing the size of the clearance gap between the cylinder and the piston assembly. Thus, a conventional lip seal having a single metal or plastic backing ring is inadequate to prevent the polymeric seal from flowing into the clearance gap created as the pressures inside the cylinder increases. Thus, an improved seal support is needed to seal the clearance gap between the cylinder and the piston assembly.

### SUMMARY

In one embodiment, the present disclosure provides a seal that is supported across its entire base in high pressure applications. In one embodiment, the present disclosure provides an upper ring that deforms under pressure to expand and fill the gaps to remove all clearances at the base of the seal. In so doing, deformation of the seal is removed, since there are no gaps for the seal to deform into.

### FIGURES

The novel features of the embodiments described herein are set forth with particularity in the appended claims. The embodiments, however, both as to organization and methods of operation may be better understood by reference to the following description, taken in conjunction with the accompanying drawings as follows.
FIG. 1 is an illustration of a front view of a piston assembly configured to be slidably disposed within a cylinder at high operating pressures between about 10,000 and about 50,000 psi, according to one embodiment.
FIG. 2 is an illustration of a top view of the piston assembly shown in FIG. 1, according to one embodiment.
FIG. 3 is an illustration of a bottom view of the piston assembly shown in FIG. 1, according to one embodiment.
FIG. 4 is an illustration of a perspective view of the piston assembly shown in FIG. 1, according to one embodiment.
FIGS. 5 and 6 are illustrations of exploded views of the piston assembly shown in FIG. 1, according to one embodiment.
FIG. 7 is an illustration of a sectional view of the piston assembly shown in FIG. 1 with the seal assembly 102 exploded from the piston, according to one embodiment.
FIG. 8 is an enlarged view of the upper and lower backing rings shown in FIG. 7 to illustrate the mating angled surfaces, according to one embodiment.
FIG. 9 is an illustration of a lip seal assembly employed in a high pressure system, according to one embodiment.
FIG. 10 is a detail view of the lip seal assembly shown in FIG. 9, according to one embodiment.
FIG. 11 is an illustration of another perspective view of the piston assembly shown in FIG. 4, according to one embodiment.
FIG. 12 is an illustration of a top view of the piston assembly shown in FIG. 11, according to one embodiment.
FIG. 13 is an illustration of a bottom view of the piston assembly shown in FIG. 11, according to one embodiment.
FIG. 14 is an illustration of an exploded view of the piston assembly shown in FIG. 11, according to one embodiment.

### DESCRIPTION

In the following detailed description, reference is made to the accompanying drawings, which form a part hereof. In the drawings, similar symbols and reference characters typically identify similar components throughout the several views, unless context dictates otherwise. The illustrative embodiments described in the detailed description, drawings, and claims are not meant to be limiting. Other embodiments may be utilized, and other changes may be made, without departing from the spirit or scope of the subject matter presented here.

Before explaining the various embodiments of the high pressure pump seal support in detail, it should be noted that the various embodiments disclosed herein are not limited in their application or use to the details of construction and arrangement of parts illustrated in the accompanying drawings and description. Rather, the disclosed embodiments may be positioned or incorporated in other embodiments, variations and modifications thereof, and may be practiced or carried out in various ways. Accordingly, embodiments of the high pressure pump seal support disclosed herein are illustrative in nature and are not meant to limit the scope or application thereof. Furthermore, unless otherwise indicated, the terms and expressions employed herein have been chosen for the purpose of describing the embodiments for the convenience of the reader and are not to limit the scope thereof. In addition, it should be understood that any one or more of the disclosed embodiments, expressions of embodiments, and/or examples thereof, can be combined with any one or more of the other disclosed embodiments, expressions of embodiments, and/or examples thereof, without limitation.

Also, in the following description, it is to be understood that terms such as front, back, inside, outside, top, bottom and the like are words of convenience and are not to be construed as limiting terms. Terminology used herein is not meant to be limiting insofar as devices described herein, or portions thereof, may be attached or utilized in other orientations. The various embodiments will be described in more detail with reference to the drawings.

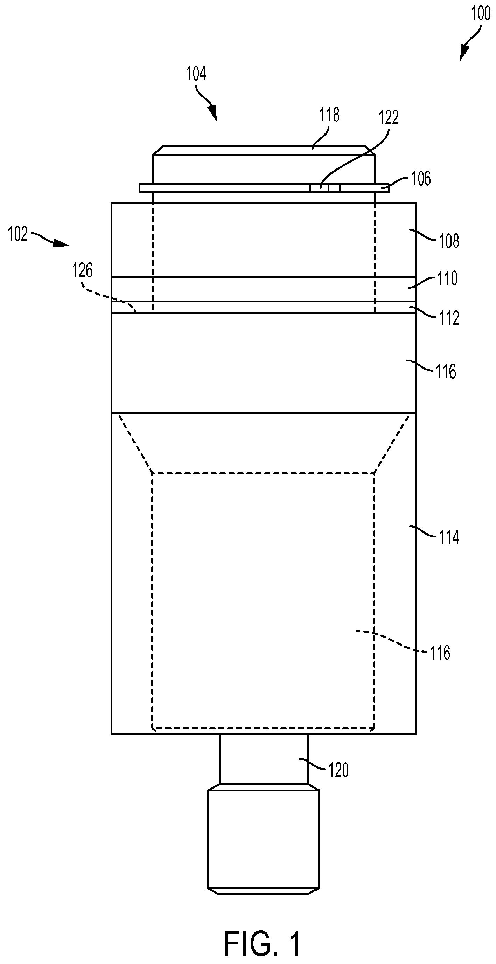

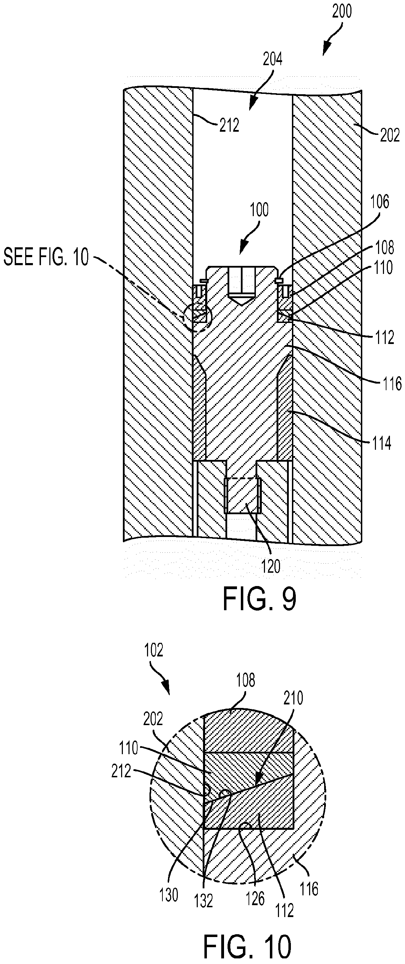

FIG. 1 is an illustration of a front view of a piston assembly 100 configured to be slidably disposed within a cylinder 202 (FIG. 9) at high operating pressures between about 10,000 and about 50,000 psi, according to one embodiment. The piston assembly 100 comprises a lip seal assembly 102 and a piston 104. The lip seal assembly 102 comprises a polymeric seal 108, an upper backing ring 110, and a lower backing ring 112. The piston 104 comprises a piston body 116 and a cylindrical wear ring 114 positioned about the piston body 116. The piston body 116 defines a lip 126 for seating or receiving the lower backing ring 112. The piston 104 further comprises a piston head 118 on the high pressure side the of the piston assembly 100 and piston rod 120. A retainer clip 106 may form a portion of the lip seal assembly 102 and is positioned in a groove 122 formed about the piston head 118. The retainer clip 106 holds the polymeric portions of the seal assembly 102 in place between the piston head 118 and the lip 126.

The pliable, readily deformable seal 108 (a polymer lip seal in this embodiment) is supported by a pair of backing rings, an upper backing ring 110 and a lower backing ring 112, made of a material that intentionally deforms under load in a predetermined manner. The upper and lower backing rings 110, 112 share an angled surface arranged such that the upper backing ring 110 closest to the seal 108 is forced radially outward, toward the cylinder wall, to remove required design clearances between the metal parts. In one embodiment, a common material used for such lip seals 108 is common grade polytetrafluoroethylene (PTFE) known under the trade name TEFLON by DuPont de Nemours Corp. Worldwide. This material has an ultimate tensile strength of 3770 psi (26 MPa, from DuPont literature). When subjected to pressures in excess of 1000 bar (15000 psi) or more, PTFE readily extrudes through clearance gaps as small as 0.002" (0.05 mm). This extrusion leads to a loss of the desired sealing.

Accordingly, the seal 108 is supported by the upper and lower backing rings 110, 112. The deformation of the upper (first) backing ring 110 is controlled by its material properties and the angle of the surface between the two components. The lower (second) backing ring 112 of the pair of backing rings may be made from several different materials, or be geometrically incorporated into one of the metal parts (the piston 104, in this embodiment). The material chosen for the upper backing ring 110 portion nearest to the seal 108 must be able to deform under load, but not extrude excessively into the metal-to-metal clearances; and simultaneously be sufficiently pliant to not damage or scratch the cylinder wall. Accordingly, in applications operating at about 30,000 psi containment, these upper and lower backing rings 110, 112 can be made from polyetheretherketone known under the trade name PEEK, trademark of Victrex ICI, a high performance engineering polymer with good chemical resistance properties. Based on information provided by Victrex, the yield strength of PEEK is about 14,200 psi (98 MPa). At about 1,500 psi PEEK acts as a solid. At about 30,000 psi PEEK acts as a plastic - fluid.

The seal 108 supporting structure made up of the two-piece upper and lower backing rings 110, 112 according to the present disclosure differs from conventional one piece lip seals in that the seal 108 support according to the present disclosure comprises a two-piece backing ring comprising an upper backing ring 110 and a lower backing ring 112 arranged to force the upper backing ring 110 outward against the cylinder wall, providing a smooth, flat, continuous support platform for the seal 108 while removing all clearances at the same time. Angled surfaces are provided between the two-piece upper and lower backing rings 110, 112, and arranged with the angles opposite to a single plastic backing ring with an angled surface to push the heel of the seal radially inward, such as the TRELLEBORG design, for example. The seal 108 extrusion is prevented not by deforming the seal 108, but rather by eliminating the clearance gaps entirely. The difference in strengths between the PTFE material of the lip seal 108 and the PEEK material of the upper and lower backing rings 110, 112 is on the order of a little more than 3:1. The PEEK has a strength that is on the order of about 14,000 psi whereas PTFE has a strength that is on the order of about 3,700 psi.

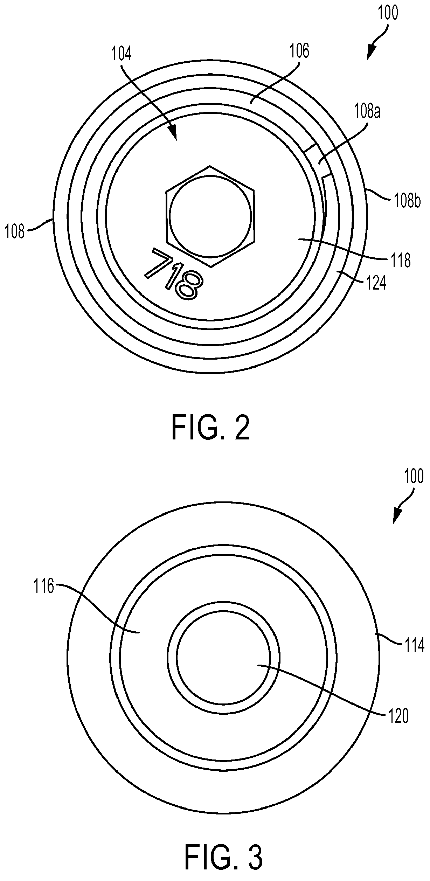

FIG. 2 is an illustration of a top view of the piston assembly 100 shown in FIG. 1, according to one embodiment. As illustrated in FIG. 2, the piston head 118 portion of the piston 104 and the retainer clip 106 disposed about the piston head 118 to hold the seal 108 in place. The polymeric seal 108 is cylindrically shaped and defines a gap 124 between an inner cylindrical wall 108a and an outer cylindrical wall 108b. The retainer clip 106 is disposed over the inner cylindrical wall 108a of the seal 108.

FIG. 3 is an illustration of a bottom view of the piston assembly 100 shown in FIG. 1, according to one embodiment. As illustrated in FIG. 3, the wear ring 114 is disposed about the piston body 116 that culminates in the piston rod 120.

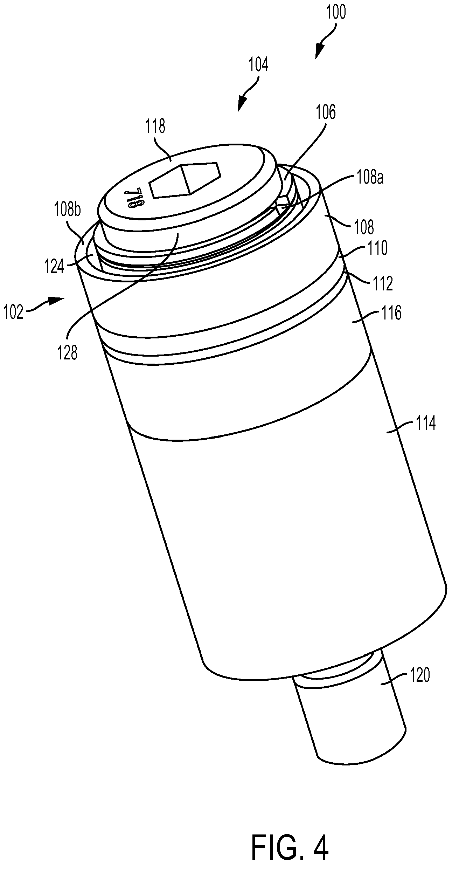

FIG. 4 is an illustration of a perspective view of the piston assembly 100 shown in FIG. 1, according to one embodiment. FIG. 4 illustrates the retainer clip 106 disposed about the circumferential groove 122 (FIG. 1) defined about a neck 128 portion of the piston head 118. The retainer ring 106 holds the seal 108 in place between the neck 128 and the lip 126 (FIG. 1) of the piston body 116. The seal 108 comprises an inner wall 108a and outer wall 108b defining a cylindrical gap 124 therebetween. The upper backing ring 110 is positioned closest to the seal 108 and the lower backing ring 112 is disposed between the lip 126 and the upper backing ring 110. The piston body 116 culminates in the piston rod 120 and the cylindrical wear ring 114 is disposed about the lower portion of the piston body 116.

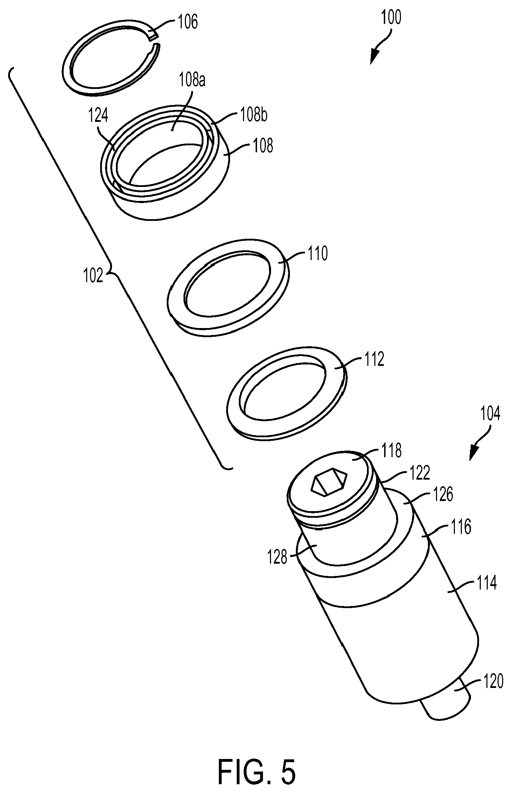

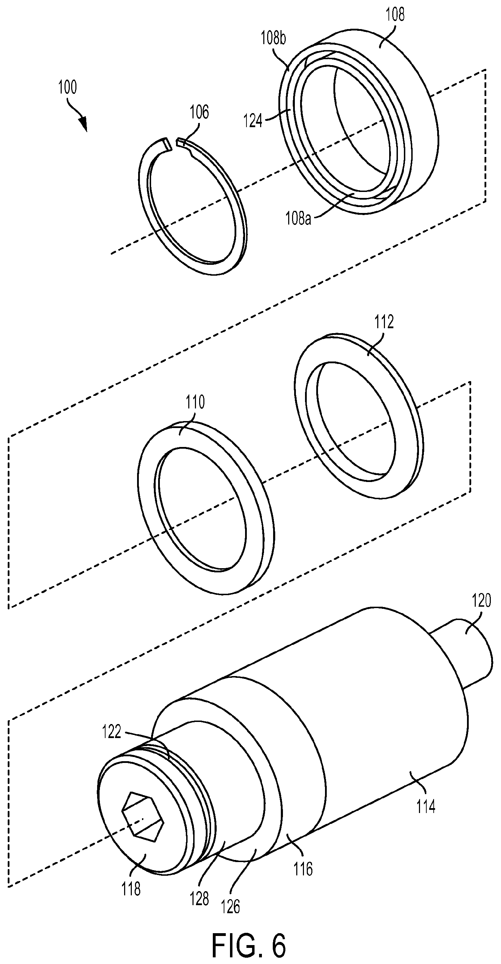

FIGS. 5 and 6 are illustrations of exploded views of the piston assembly 100 shown in FIG. 1, according to one embodiment. As shown in FIGS. 5 and 6, the components of the seal assembly 102 are exploded from the piston 104. The lower backing ring 112 is disposed over the neck portion 128 of the piston head 118 and is seated on the lip 126 defined by the piston body 116. The upper backing ring 110 is disposed over the neck 128 and is placed on top of the lower backing ring 112. The seal 108 is then disposed over the neck 128 and is placed over the upper backing ring 110. Finally, the retainer ring 106 is placed in the circumferential groove 122 defined in the neck 128 portion of the piston head 118.

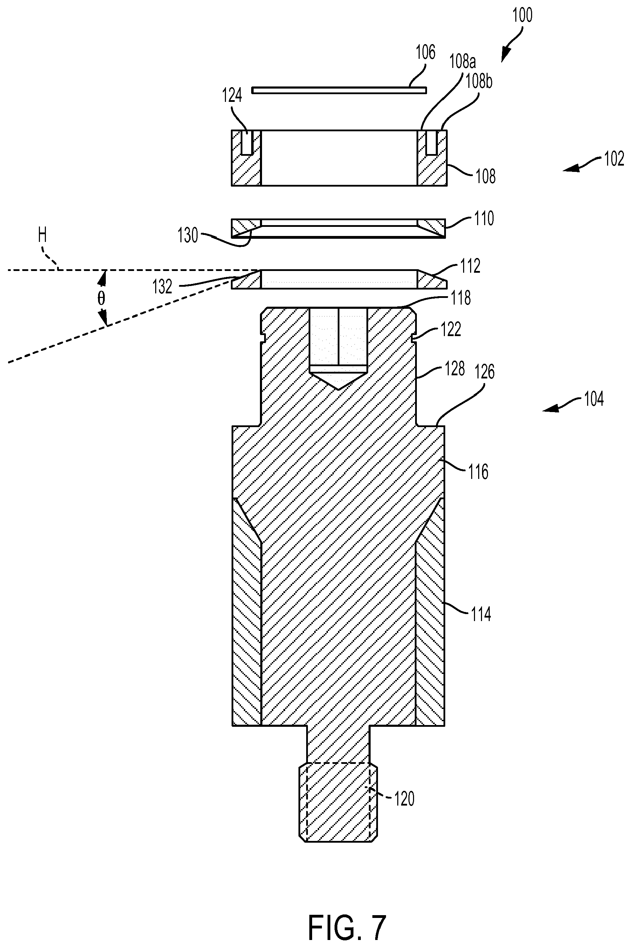

FIG. 7 is an illustration of a sectional view of the piston assembly 100 shown in FIG. 1 with the seal assembly 102 exploded from the piston 104, according to one embodiment. FIG. 7 shows the wear ring 114 disposed about the piston body 116. The upper backing ring 110 comprises an angled surface 130 and the bottom backing ring 112 comprises an angled surface 132. The angle of the mating angled surfaces 130, 132 between the upper and lower backing rings 110, 112 determine the degree of lateral (radial) force that is applied to the cylinder wall. If the angle θ relative to the horizontal axis H is too shallow, there is not enough force generated to remove all of the undesirable clearance, and the effect is not produced. As the angle θ between the angled surfaces 130, 132 relative to the horizontal axis H is increased, the radial force is increased, and the wear of the material of the upper and lower backing rings 110, 112, e.g., polyetheretherketone known under the trade name PEEK by Victrex ICI, against the cylinder wall increases. Excess wear leads to shedding of PEEK particulates, which can become lodged between the seal lip 126 and the cylinder wall; defeating the seal function. In one embodiment (30,000 psi), a suitable angle θ between the backing ring surfaces is about 20º as shown, although variations of several degrees in the angle θ perform equally well. A suitable angle θ is dependent on the containment pressure and the properties of the material that the upper backing ring 110 is made of.

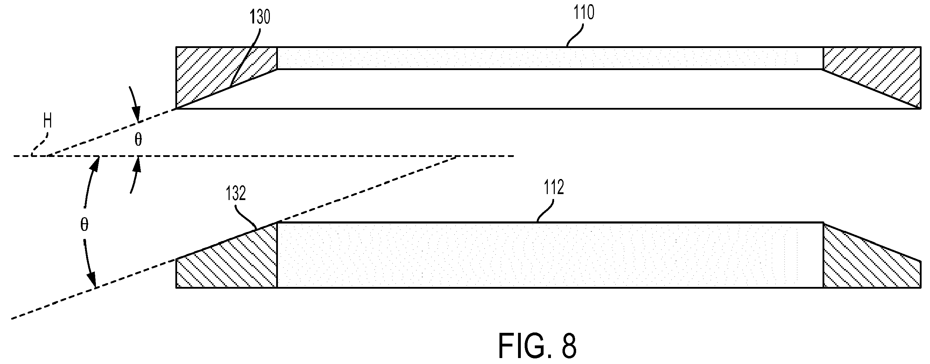

FIG. 8 is an enlarged view of the upper and lower backing rings 110, 112 shown in FIG. 7 to illustrate the mating angled surfaces, according to one embodiment. The two the upper and lower backing rings 110, 112 components work together in such a way that as the pressure is applied, the upper and lower backing rings 110, 112 deliberately deform to maintain intimate contact with the cylinder as the cylinder grows wider and removes all of the clearance between the upper and lower backing rings 110, 112 support and the cylinder wall so that the seal 108 (FIG.1) has nowhere to extrude through and thus cannot flow around these. The reason that the upper and lower backing rings 110, 112 are angled backwards is that the upper backing ring 110 deliberately distorts toward the cylinder wall. As shown in FIG. 8, the actual angle θ that is involved, 20º empirically determined. According to experiments and tests, 20º worked, and angles θ that are slight variants from 20º, say about 15º to about 30º, also performed suitably. It should be noted, however, the angles of about 20º appeared to work optimally.

FIG. 9 is an illustration of a lip seal assembly 102 employed in a high pressure system 200, according to one embodiment. FIG. 10 is a detail view of the lip seal assembly 102, according to one embodiment. As shown in FIG. 9, the high pressure system 200 comprises a containment cylinder 202 having a smooth inner wall 212 that becomes a pressurized chamber 204. The piston assembly 100 is shown disposed within the pressure chamber 204. The retainer clip 106 is affixed to the circumferential groove 122 defined about the neck 128 as most clearly shown in FIG. 5. The retainer clip 106 holds the seal 108 against the upper backing ring 110, which in turn is pushed against the lower backing ring 112, which rests on the lip 126 (FIG. 5). As shown more clearly in FIG. 10, the lip seal assembly 102 comprises the seal 108, the upper backing ring 110, and the lower backing ring 112. The walls of the seal 108, the upper backing ring 110, and the lower backing ring 112 are forced against the inner wall 212 of the cylinder 202 while the bottom surface of the lower backing ring 112 is forced against the lip 126 portion of the piston body 116.

Referring now to FIGS. 9 and 10, the lip seal assembly 102 is frequently used for pressure containment inside a cylinder 202 that defines a pressure chamber 204 having a smooth inner wall 212. As previously discussed, the lip seal assembly 102 comprises a seal 108 that is made from a resilient polymer, such as PTFE, that readily conforms to the containment cylinder 202 inner wall 212 surfaces. At low pressure operation, the seal 108 can be made from a material that can be easily deformed; but at higher pressures, the seal 108 material can be extruded through small clearances and gaps that develop between the inner wall 212 of the cylinder 202 and the lip seal assembly 102.

As previously discussed, the common material used for the seal 108 is PTFE. When using a PTFE seal 108 at very high pressures; e.g. 30,000 psi (2070 bar), the tolerable clearance gap becomes sufficiently small that the components cannot move without damaging one another. Further, in an application where an internal piston 104 is contained within the cylinder 202, the pressure causes the cylinder 202 to expand, increasing the clearances.

By using two mated backing rings such as the upper backing ring 110 and the lower backing ring 112 made from a material having a higher strength relative to PTFE and comprising angled surfaces 130, 132 arranged such that the upper and lower backing rings 110, 112 deform under pressure, the clearances that the seal 108 is exposed to can be eliminated. In the example where the operating pressure is about 30,000 psi in the pressure chamber 204 of the containment cylinder 202, the upper and lower backing rings 110, 112 can be made from PEEK, which is a high performance engineering polymer with good chemical resistance properties having a yield strength of about 14,200 psi (98 MPa).

When high pressure (10,000 to 50,000 psi) is applied to the lip seal assembly 102, the seal 108 presses against the upper backing ring 110, and the angled surface 210 between the upper and lower rings 110, 112 generates a radial (outward) deformation to the upper ring 110; resulting in the upper ring being 110 pressed against the cylinder wall 212. Because PEEK is a resilient polymer; the resulting radial pressure of the upper ring 110 against the cylinder wall 212 eliminates clearances between the seal 108 and the cylinder wall 212 and does not lead to damage to the cylinder wall 212.

As shown, in FIG. 10, at the surface 210 defined where the upper and lower angled surfaces 130, 132 of the corresponding upper and lower backup rings 110, 112 meet, the lower angled surface 132 of the lower backup ring 112 is configured to generate or apply a radial force against the angled surface 130 of the upper backup ring 110. Thus, the components of the lip seal assembly 102 operate in conjunction to develop a suitable seal against the inner wall 212 of the cylinder 202. As discussed, the choice of materials selected for the seal 108 and the material selected for the angles of the surfaces 130, 132 of the upper and lower backup rings 110, 112 are factors to be taken into consideration to provide a suitable seal at the high operating pressures of 10,000 to 50,000 psi discussed herein.

The angle of the mating surface 210 between the upper and lower backing rings 110, 112 determine the degree of lateral (radial) force that is applied to the cylinder wall 212. If the angle θ relative to the horizontal H is too shallow, there is not enough force generated to remove all of the undesirable clearance, and the effect is not produced. As the angle θ between the surfaces relative to the horizontal H is increased, the radial force is increased, and the wear of the PEEK against the cylinder wall 212 increases. Excess wear leads to shedding of PEEK particulates which can become lodged between the seal lip 126 and the cylinder wall 212; defeating the seal function. In one embodiment (30,000 psi), the appropriate angle between the backing ring surfaces is about 20º, although variations of several degrees in the angle θ perform equally well. The appropriate angle θ may dependent on the pressure applied to the containment cylinder 202 and the properties of the material that the upper backing ring 110 is made of.

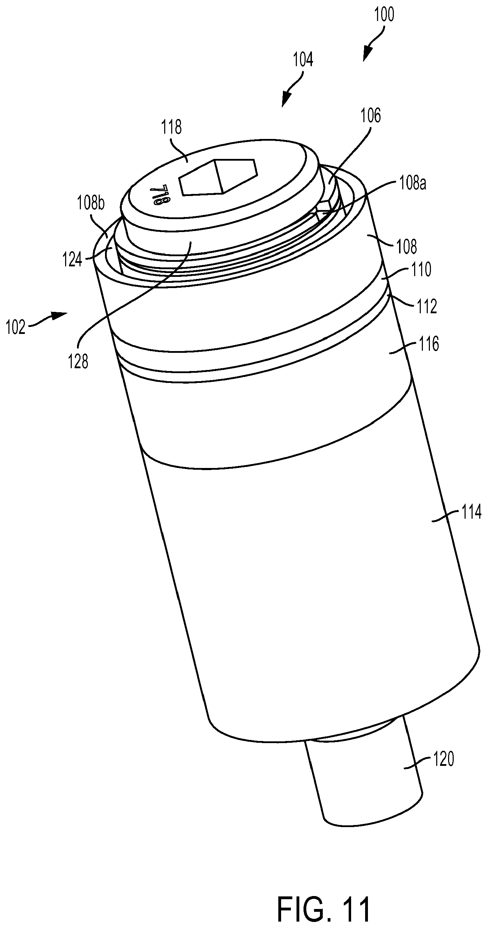

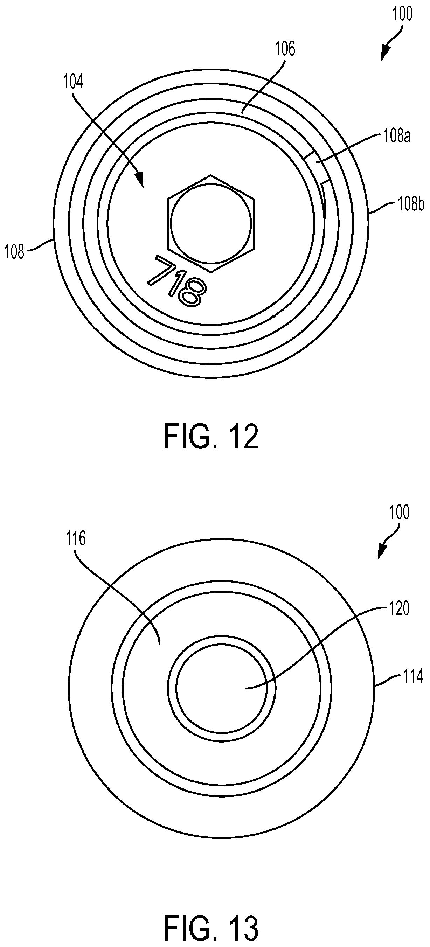

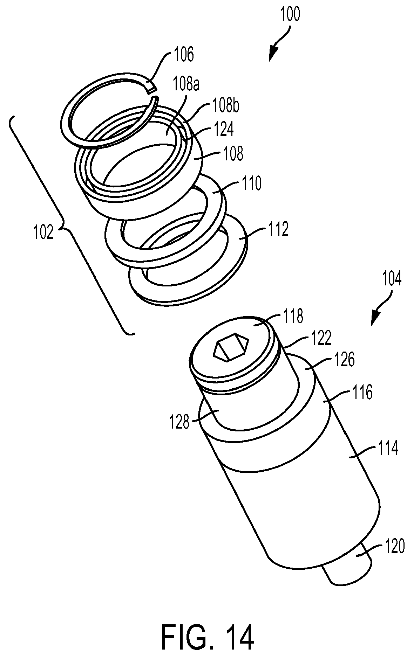

FIGS. 11-14 are solid model views of the piston assembly 100 shown in FIG. 1, where FIG. 11 is an illustration of a solid model perspective view of the piston assembly 100 shown in FIG. 4, according to one embodiment; FIG. 12 is an illustration of a top view of the solid model of piston assembly 100 shown in FIG. 11, according to one embodiment; FIG. 13 is an illustration of a bottom view of the solid model of piston assembly 100 shown in FIG. 11, according to one embodiment; and FIG. 14 is an illustration of an exploded view of the solid model of piston assembly 100 shown in FIG. 11, according to one embodiment.

### Examples

Example 1 - A lip seal assembly comprising a seal, an upper backing ring disposed below the seal, and a lower backing ring disposed below the upper backing ring, wherein the upper and lower backing rings are configured to distort in a predetermined manner.
Example 2 - The lip seal assembly of Example 1, wherein the upper backing ring comprises an angled surface and the lower backing ring comprises an angled surface configured to mate with the angled surface of the upper backing ring.
Example 3 - The lip seal assembly of Example 2, wherein the angle relative to a horizontal axis of the angled surfaces of the upper and lower backing rings is about 10° to about 30°.
Example 4 - The lip seal assembly of Examples 1 or 2 or 3, wherein the seal is made of a first polymeric material, wherein the upper and lower backing rings are made of a second polymeric material, and wherein the second polymeric material has a strength that is greater than the first polymeric material.
Example 5 - The lip seal assembly of Example 4, wherein the first polymeric material is polytetrafluoroethylene and the second polymeric material is polyetheretherketone.
Example 6 - The lip seal assembly of Examples 1 or 2 or 3 or 4 or 5, wherein the upper and lower backing rings are configured to distort in the predetermined manner to maintain contact between a piston assembly and a cylinder.
Example 7 - The lip seal assembly of Examples 1 or 2 or 3 or 4 or 5, wherein the upper and lower backing rings are configured to distort in the predetermined manner to prevent the seal from extruding through a clearance gap between a piston assembly and a cylinder.
Example 8 - The lip seal assembly of Example 7, wherein the upper and lower backing rings share an angled surface configured such that the upper backing ring is forced radially outward against the cylinder to remove the clearance gap at a base of the seal as pressure is applied to the seal.
Example 9 - The lip seal assembly of Example 8, wherein the angled surface is about 20°.
Example 10 - The lip seal assembly of Examples 8 or 9, wherein the angle of the angled surface to remove the clearance gap is based on the pressure applied and a material of the upper backing ring.
Example 11 - The lip seal assembly of Examples 8 or 9 or 10, wherein the angled surface is defined by an upper angled surface of the upper backing ring and a lower angled surface of the lower backing ring, and wherein, as the pressure is applied to the seal and the seal presses against the upper backing ring, the lower angled surface applies a radial force against the upper angled surface to force the upper backing ring outward against the cylinder.
Example 12 - The lip seal assembly of Examples 6 or 7 or 8 or 9 or 10 or 11, wherein the cylinder is pressurized between about 10,000 psi and about 50,000 psi.
Example 13 - The lip seal assembly of Examples 7 or 8 or 9 or 10 or 11 or 12, wherein the upper and lower backing rings are configured to distort as pressure is applied and as the cylinder expands to prevent the seal from extruding through the clearance gap between the piston assembly and the cylinder.
Example 14 - The lip seal assembly of Examples 1 or 2 or 3 or 4 or 5 or 6 or 7 or 8 or 9 or 10 or 11 or 12 or 13, wherein the lower backing ring is configured to be disposed over a neck of a piston head and seated on a lip defined by a piston body, wherein the upper backing ring is configured to be disposed over the neck of the piston head and seated on top of the lower backing ring, and wherein the seal is configured to be disposed over the neck of the piston head and seated over the upper backing ring.
Example 15 - The lip seal assembly of Example 14, further comprising a retainer clip configured to be positioned in a groove defined about the neck of the piston head to hold the seal, the upper backing ring, and the lower backing ring between the piston head and the lip.

Although various embodiments have been described herein, many modifications, variations, substitutions, changes, and equivalents to those embodiments may be implemented and will occur to those skilled in the art. Also, where materials are disclosed for certain components, other materials may be used. It is therefore to be understood that the foregoing description and the appended claims are intended to cover all such modifications and variations as falling within the scope of the disclosed embodiments. The following claims are intended to cover all such modification and variations.

## Claims

1. A lip seal assembly, comprising:
a seal;
an upper backing ring disposed below the seal; and
a lower backing ring disposed below the upper backing ring, wherein the upper and lower backing rings are configured to distort in a predetermined manner.

2. The lip seal assembly of claim 1, wherein the upper backing ring comprises an angled surface and the lower backing ring comprises an angled surface configured to mate with the angled surface of the upper backing ring.

3. The lip seal assembly of claim 2, wherein the angle relative to a horizontal axis of the angled surfaces of the upper and lower backing rings is about 10°to about 30°.

4. The lip seal assembly of claim 1, wherein the seal is made of a first polymeric material, wherein the upper and lower backing rings are made of a second polymeric material, and wherein the second polymeric material has a strength that is greater than the first polymeric material.

5. The lip seal assembly of claim 4, wherein the first polymeric material is polytetrafluoroethylene and the second polymeric material is polyetheretherketone.

6. The lip seal assembly of claim 1, wherein the upper and lower backing rings are configured to distort in the predetermined manner to maintain contact between a piston assembly and a cylinder.

7. The lip seal assembly of claim 1, wherein the upper and lower backing rings are configured to distort in the predetermined manner to prevent the seal from extruding through a clearance gap between a piston assembly and a cylinder.

8. The lip seal assembly of claim 7, wherein the upper and lower backing rings share an angled surface configured such that the upper backing ring is forced radially outward against the cylinder to remove the clearance gap at a base of the seal as pressure is applied to the seal.

9. The lip seal assembly of claim 8, wherein the angled surface is about 20°.

10. The lip seal assembly of claim 8, wherein the angle of the angled surface to remove the clearance gap is based on the pressure applied and a material of the upper backing ring.

11. The lip seal assembly of claim 8, wherein the angled surface is defined by an upper angled surface of the upper backing ring and a lower angled surface of the lower backing ring, and wherein, as the pressure is applied to the seal and the seal presses against the upper backing ring, the lower angled surface applies a radial force against the upper angled surface to force the upper backing ring outward against the cylinder.

12. The lip seal assembly of claim 7, wherein the cylinder is pressurized between about 10,000 psi and about 50,000 psi.

13. The lip seal assembly of claim 12, wherein the upper and lower backing rings are configured to distort as pressure is applied and as the cylinder expands to prevent the seal from extruding through the clearance gap between the piston assembly and the cylinder.

14. The lip seal assembly of claim 1, wherein the lower backing ring is configured to be disposed over a neck of a piston head and seated on a lip defined by a piston body, wherein the upper backing ring is configured to be disposed over the neck of the piston head and seated on top of the lower backing ring, and wherein the seal is configured to be disposed over the neck of the piston head and seated over the upper backing ring.

15. The lip seal assembly of claim 14, further comprising a retainer clip configured to be positioned in a groove defined about the neck of the piston head to hold the seal, the upper backing ring, and the lower backing ring between the piston head and the lip.
